# EUROPEAN PATENT APPLICATION

(11) **EP 1 251 513 A1**
(43) Date of publication of application: **23.10.2002**
(21) Application number: 02252722.0
(22) Date of filing: 17.04.2002
(51) Int. Cl.: G11B 27/034, G11B 27/34

(54) **An electronic editing system**

(30) Priority: 19.04.2001 GB 0109670
(71) Applicant: Quantel Limited, Newbury, Berkshire RG14 2NX (GB)
(72) Inventor: Hinson, Roy Neil, Newbury, Berkshire RG20 4UB (GB)
(74) Representative: Cross, James Peter Archibald

(57) **Abstract**

An electronic video processing system (10) stores video clip data in a video store (11). The video data is input into the video store (11) via an input selector (12). In an editing mode of operation, data relating to a plurality of video clips is read out from the video store (11) to a display store (22) where the data is processed before being stored so as to enable several frames to be displayed simultaneously at different, overlapping, or shared, portions of a monitor (25). The system (10) has a jog/shuttle wheel (30a), rotation of which in one direction by a user will cause a selected clip displayed on the monitor (25) to scroll forward and rotation in the other direction will cause the displayed clip to scroll backward. As the start or end of the clip is neared, a processor (69), via a control interface (70), causes a motor (67) to oppose rotation of the wheel (30a) to simulate the user hitting an end-stop where the start or end of the displayed clip is reached.

## Description

This invention relates to an electronic editing system.

In our British Patent Publication No 2 266 037 and equivalent European Patent Publication No 560 624 and United States Patent No 5 808 628, the contents of which are incorporated herein by reference, there is described an electronic video system for displaying a plurality of video clips. The system has a store for storing data representing a multiplicity of video frames, a processor connected with the store, a user operable input device connected with the processor and serving to cause the processor to fetch from and store in the storing means data of video frames comprising any one of said video clips, a display store connected to the processor for storing video clip frames brought by the processor from or supplied by the processor to the store and a monitor connected with the display store for displaying frames of video data brought by the processor to the display store.

The abovementioned patent publications also describe the display monitor as displaying and combining video clips in a variety of ways by virtue of the processor responding to manipulation of the user operable input device, specifically a pen and tablet, for example, by splicing, creation of dissolves etc. In each case previewing of the combined clip is afforded so that the operator need not commit himself to a particular combination until he is completely satisfied with the form of the combined clip.

Whilst the system described in the earlier patent publications has proved to be commercially widely acceptable, one way in which it is capable of improvement has been identified. In using the apparatus described in the publications to assemble a story by combining and editing clips from a sequence of clips, the need to change edit positions in the sequence or the order of clips in the sequence occurs frequently and involves scrolling through the sequence of clips until the region of the sequence is displayed which contains the frame or frames at which the editing is to take place or at which the order of the clips is to be changed.

In our British patent application published as GB-A-2 312 350, and equivalent European Publication No EP-A-802 686 and United States Patent No 5 982 364, the contents of which are incorporated herein by reference, there is described a similar electronic video processing system. The system comprises a store for storing data defining plural video clips, and a processor for selecting from the stored video clips a plurality of clips and for selectively combining data defining the selected clips to form data defining a video story. A plurality of representative frames respectively representing selected video edits is displayable to portray a portion of the video story. Also, for each selected clip, a frame representative thereof is displayable together with a pair of smaller frames derived from the first and last frames of the clip. These representations of the video edits facilitate the user's understanding and navigation of the video story.

The present invention aims to improve navigation by a user through a video story by way of tactile feedback through a user operable device for controlling operation of the system.

According to one aspect of the invention there is provided an electronic editing system for editing one or more sequences of input data to produce one or more sequences of output data, the sequences comprising plural editing positions, in which system visual representations of one or more selected sequences of input data or output data are displayed on a monitor, are selectable by way of a user operable device and, once selected, can be scrolled through by user manipulation of the user operable device, the user operable device comprising a manipulable member with a code generator for generating a code representative of manipulation of the member and a movement restrictor for restricting movement of the member, the system being arranged such that the movement restrictor reacts to scrolling towards at or past an editing position in a selected sequence by restricting user manipulation of the manipulable member.
According to another aspect of the invention there is provided an electronic editing system comprising:
a store for storing data representing one or more sequences comprising one or more edits;
a processor for reading data representing one or more selected sequences from the store and generating data defining a visual representation of the or each selected sequence for display on a monitor.

first user operable means for generating position information and operation data, the processor responding to the position information by generating data defining a cursor for display on the monitor and responding to the operating data by selecting a displayed representation of a sequence, and
second user operable means for generating linear data, the processor responding to the linear data by scrolling the selected displayed representation of a sequence, and
generating a control signal when the scrolling approaches or passes an edit in the sequence, the second user operable means comprising a reactor responsive to the control signal for providing a reaction that is transmitted as tactile feedback to the user.

The above and further features of the invention are set forth with particularity in the appended claims and together with advantages thereof will become clearer from consideration of the following detailed description of an exemplary embodiment of the invention given with reference to the accompanying drawings.

In the drawings:
Figure 1 is a block diagram of a system embodying the invention;
Figure 2 illustrates a screen of a display monitor which is part of the system of Figure 1; and
Figure 3 shows, in schematic form, a jog/shuttle wheel used in the system of Figure 1.

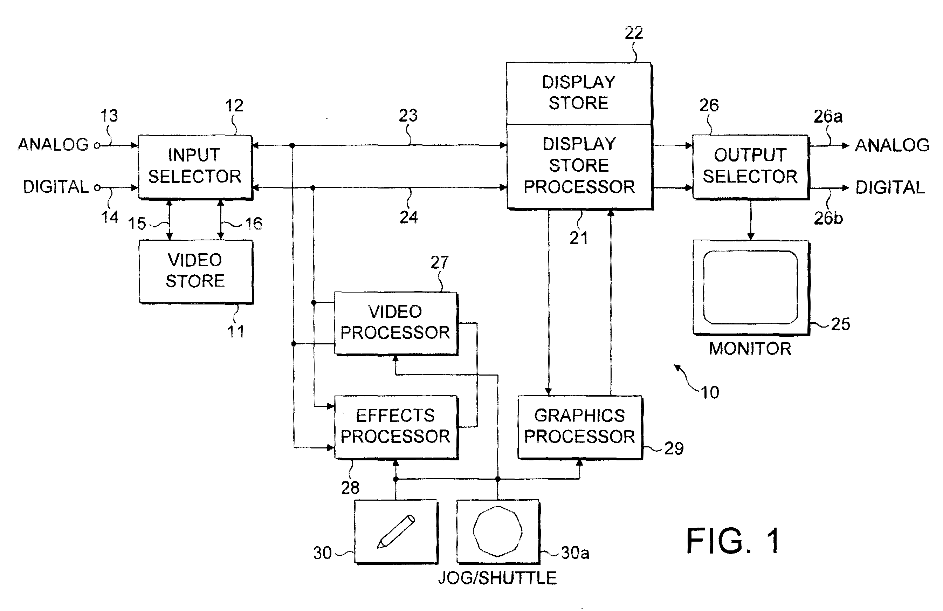

Referring first to Figure 1, there is shown an electronic video processing system 10 in which video clip data is stored in a video store 11. The video data is input to the video store 11 via an input selector 12 which includes both an analog input 13 and a digital input 14 to enable data to be input in either analog or digital format from an off-line bulk storage device or library (not shown) such as a VTR. The video clip data is stored in digital form in the video store 11 and the input selector therefore comprises a suitable converter for converting the incoming clip data into the required format. The input selector 12 is connected to the video store 11 via two bi-directional data paths 15, 16 each capable of conveying a full frame of data at at least video rate to and from the video store 11.

The video store comprises at least two disc packs, each having two disc drive devices in parallel. Each pack requires two disc drives in order to achieve the necessary bandwidth since each disc is only able to receive or output data at approximately half broadcast standard video rate. The provision of two bi-directional paths 15, 16 enables two frames of data to be simultaneously written to or read from the store 11 or for one frame to be written to while another is read from the store 11. This enables a system 10 of great flexibility to be provided.

The system 10 further comprises a display store 22 which is connected via two bi-directional buses 23, 24 to the input selector 12. The display store 22 comprises a large scratch pad store for storing data relating to several frames of video and a display processor 21 for processing the frame data therein to produce respective frames of reduced size for concurrent display at different portions of a monitor 25, as will be described in greater detail hereinafter.

A video clip may be read out from the video store 11 and written directly to the display store 22 at video rate for display on the monitor 25 either at full size or at half, quarter or eighth size. Alternatively, video clips may be transferred from a bulk storage library (not shown) via the input selector 12 to the display store 22. Data from the display store 22 is read by an output selector 26 and output to the monitor 25 for display. This enables the user to preview one or more video clips or to identify video clips stored off-line in a bulk store library (not shown) for transfer to the video store 11. The output selector 26 also comprises both analog and digital outputs 26a, 26b, similar to the analog and digital inputs 13, 14 of the input selector 12, to enable video clip data to be output in either analog or digital format to the bulk storage device for example.

In an editing mode of operation data relating to a plurality of video clips is read out from the video store 11 a frame at a time to the display store 22 where the data is processed before being stored so as to enable several frames to be displayed simultaneously at different, overlapping, or shared, portions of the monitor 25. The processed data is output from the display store in raster order for display on the monitor 25. The video store has associated with it a video processor 27 and an effects processor 28. The video processor 27 is arranged to perform such operations as generating a keying signal, modifying colour, changing texture, and the effects processor 28 generates spatial effects such as changes of size, position and spin to one or more frames of a video clip, which operations and effects are all, per se, well known. Frames modifies by the video processor 27 and effects processor 28 are supplied or returned to the display store 22 for display on the monitor 25.

The display store 22 also has associated with it a graphics processor 29 which enables a user to paint into each frame as described in our British Patent No 2 089 625 and/or to create a key or stencil as described in our British Patent No 2 113 950. The graphics processor 29 is responsive to user operable input devices such as a stylus and touch tablet device 30 and a jog/shuttle wheel 30a, as indeed are the video processor 27, the effects processor 28 and the display store processor 21.

Video clips that are to be used in compiling a video story are loaded from the bulk store (not shown) via the input selector 12 to the video store 11. One of the bi-directional paths, e.g. 15, is used to transfer the incoming video clip data to the video store 11 and this leaves the other path, e.g. path 16 free to transfer data relating to another video clip of the story. From the store 11, the data of the clip of the story can be read by the processor of the display store 22 into that store for display of the video on the monitor.

After loading of the clip from the store 11, either alone or together with other clips to be used in the video story, into the display store 22 and displaying it in area 33 of the monitor, manipulating the pen and tablet or other suitable manually operable device in known manner causes the appropriate mode of operation of the display store processor to be selected for creating the video story from the loaded clip or clips. Further clips can be brought into the display store 22 either one at a time by the display processor 21 and displayed in a working area or they can be brought successively into the display store and attached one to the next so that the entire length of the clips forming the story can be sequentially displayed using a scrolling facility, to be described hereinbelow.

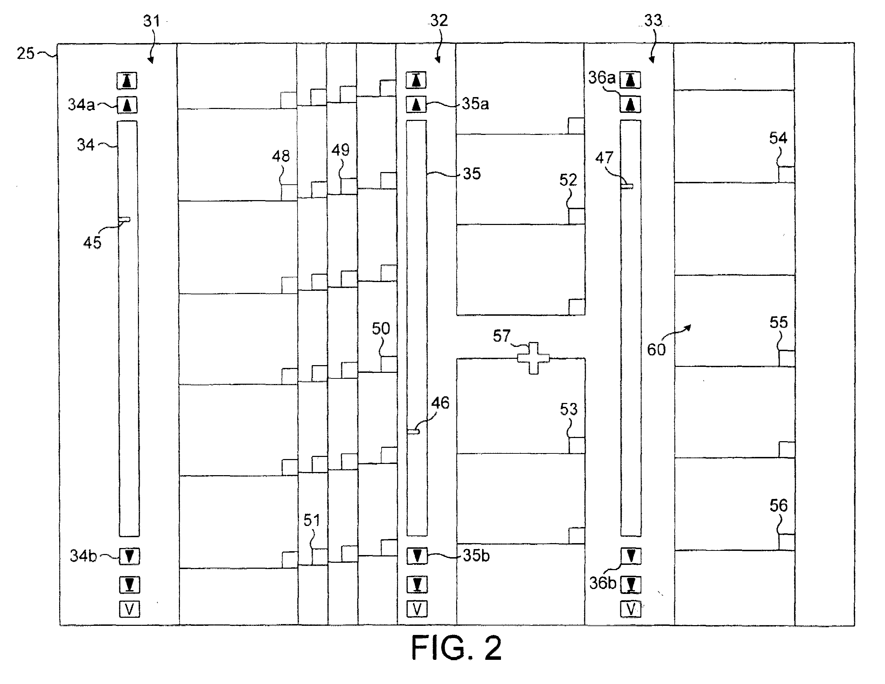

During editing, the video processor in the display store 22 is arranged to generate from the input video clips a display that represents an editing environment such as the display shown in Figure 2 of the accompanying drawings. As shown in Figure 2, the display is divided into three distinct working areas 31, 32, 33 by three so-called reel bars 34, 35 and 36.

Each reel bar 34 to 36 includes a marker 45 to 47 which is movable along the reel bar to provide an indication of the position of the displayed frames in relation to the clip as a whole and each displayed frame includes at its bottom right hand corner an information box, for example 48 to 56, to provide a further indication of the positions of the displayed frames in the video clips. The information in each box may for example be the number, i.e. position, of the frame in the clip or it may be time codes generated by a VTR when the frames were originally recorded.

A cursor 57 which is generated by the display processor and responds to manipulation of the pen on the touch tablet. The cursor is used to control many operations performed by the system 10. Some of these operations are described in our British Patent Application No 2 312 350 and corresponding US Patent No 5 982 364. For example, the reel bars 34 to 36 each have associated direction control icons 34a and b, 35a and b, and 36a and b. The reel bars 34 to 36, the control icons 34a and b, 35a and b and 36a and b and the cursor 57 are all generated by the processor 21 within the display store 22. Placing the cursor 57 over the control icon 36a for example and pressing the stylus firmly on the touch tablet will cause the clip 60 associated with the reel bar 36 to scroll up whilst selecting icon 36b will cause the clip to scroll down. Similar operations are performed by selection of the other icons as will be readily apparent to those possessed of the appropriate skills from consideration of the aforementioned patent publications.

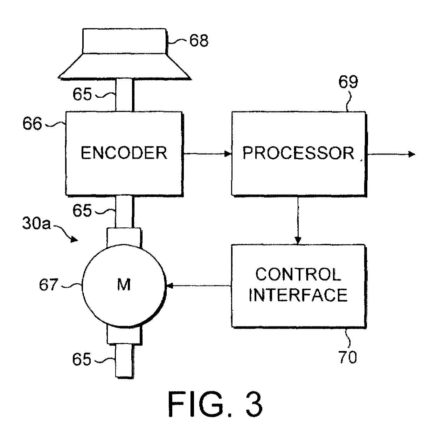

A video story displayed on the monitor may be many minutes long and comprise thousands of frames made up from a large number of clips. Navigating through such a long story and quickly identifying edit positions can be difficult. The job/shuttle wheel 30a is provided in the system 10 in order to ease navigation. The scrolling facility is enhanced in the system 10 illustrated in Figure 1 by way of the jog/shuttle wheel 30a.
The jog/shuttle wheel 30a is shown schematically in Figure 3 of the accompanying drawings. The wheel 30a comprises a shaft 65 to which is mounted a rotary encoder 66, a motor 67 and a knob 68. A local processor 69 is connected to receive data from the rotary encoder 66 and to control the motor 67 via a control interface 70. User manipulation of the knob 68 causes the shaft 65 to rotate and the rotary encoder to output data to the local processor 69 where it is processed.

The local processor 69 outputs positional information relating to the rotation of the shaft to the processors 27, 28 and 29 (see Figure 1) where it is used to control scrolling through a selected clip or clips displayed on the monitor 25 (see Figure 2). The processors 27, 28 and 29 also send information back to the local processor 69, relating to edit positions and the start and end of the selected clip or clips. The local processor 69 controls operation of the motor 67 depending on the information that it receives from the processors 27, 28 and 29. The motor 67 is controlled to provide the user with tactile feedback during a scrolling operation.

Rotation of the wheel 30a in one direction by the user will cause the selected clip 10 as displayed on the monitor 25 to scroll forward, and rotation in the other direction will cause the displayed clip to be scrolled backward. The local processor allows the motor 67 to rotate freely with the shaft 65 until the displayed video approaches the start or end of the clip. As the start or end of the clip is neared, the processor 69, via the control interface 70, causes the motor 67 to oppose rotation of the shaft. This opposition is increased and reaches a maximum when the start or end of the clip is actually reached. Naturally, with a small motor it is not possible completely to prevent rotation of the shaft, but sufficient resistance to rotation can be created to simulate the user hitting an end-stop when the start or end of the displayed clip is reached.

The processor 69 is also used to provide tactile feedback in the form of a physical "blip" in the rotation of the shaft 65 whenever the user scrolls past an edit position. Edit position information from the processors 27, 28 and 29 causes the local processor 69 to control the motor to impart to the shaft a brief resistance to rotation as an edit position is scrolled past in the displayed clip. Different responses may be used to indicate different types of edit positions. For example, a single "blip" might represent a simple cut and a double "blip" might represent a dissolve.

In this way, the user is provided with both visual and tactile cues to the start/end of, and edit positions within, a clip. Visual cues can be easily missed if the user is scrolling quickly through a story or clip. The addition of tactile feedback increases the likelihood of an edit position being found during a scrolling operation.

It will be appreciated by those possessed of the appropriate skills that the use of the jog/shuttle wheel is not limited to scrolling through video clips. Video is usually accompanied by audio in the form of plural audio tracks representing say, stereo left and right channels, background sound and a narrative. Thus, each video clip will have one or more associated audio clips. Video editing systems, therefore, commonly include an audio editing system to enable appropriate editing of the audio clips to suit the editing of the video clips. Complex audio edits are commonly required. For example, video showing a car driving along a road may have audio that begins with a musical backing that fades down as a narrative begins, and the soundtrack of the car may pan from left to right (say) as the car moves in the video image. Each event has a corresponding editing position in one or more of the audio tracks.

Systems are available in which a visual representation of audio tracks is provided. Indeed, our own HENRY™ editing system includes such a facility. The visual representations are in the form of horizontal bars (equivalent to the reel bars 34 to 36 in Figure 2) are for each track, displayed together in parallel on the monitor 25. Markers are used to mark events in audio tracks. The tactile control arrangement described above is, therefore, well suited for use also in navigation through audio tracks.

It will also be appreciated that the processors 27, 28, 29 and 69 have been shown separately to facilitate understanding of the functions they perform. It would, of course, be entirely practical to combine some or al of the processors 27, 28, 29 and 69 in a single processing unit that controls the entire system 10. Similar considerations apply to other functional units within the system illustrated in the accompanying drawings.

Having thus described the present invention by reference to a preferred embodiment it is to be well understood that the embodiment in question is exemplary only and that modifications and variations such as will occur to those possessed of appropriate knowledge and skills may be made without departure from the spirit and scope of the invention as set forth in the appended claims and equivalents thereof.

## Claims

1. An electronic editing system for editing one or more sequences of input data to produce one or more sequences of output data, the sequences comprising plural editing positions, in which system visual representations of one or more selected sequences of input data or output data are displayed on a monitor, are selectable by way of a user operable device and, once selected, can be scrolled through by user manipulation of the user operable device, the user operable device comprising a manipulable member with a code generator for generating a code representative of manipulation of the member and a movement restrictor for restricting movement of the member, the system being arranged such that the movement restrictor reacts to scrolling towards at or past an editing position in a selected sequence by restricting user manipulation of the manipulable member.

2. An electronic editing system comprising:
a store for storing data representing one or more sequences comprising one or more edits;
a processor for reading data representing one or more selected sequences from the store and generating data defining a visual representation of the or each selected sequence for display on a monitor.
first user operable means for generating position information and operation data, the processor responding to the position information by generating data defining a cursor for display on the monitor and responding to the operating data by selecting a displayed representation of a sequence, and
second user operable means for generating linear data, the processor responding to the linear data by scrolling the selected displayed representation of a sequence, and generating a control signal when the scrolling approaches or passes an edit in the sequence, the second user operable means comprising a reactor responsive to the control signal for providing a reaction that is transmitted as tactile feedback to the user.
